# EUROPEAN PATENT SPECIFICATION

(11) **EP 4 574 756 B1**
(45) Date of publication and mention of the grant of the patent: **16.09.2026**
(21) Application number: 24465524.7
(22) Date of filing: 03.06.2024
(51) Int. Cl.: C01B 32/15, C01B 32/174, A61K 47/02, H01G 11/32, H01G 11/36, H01G 11/86, G01N 27/414, G01N 27/327

(54) **PREPARATION OF SCREEN-PRINTED ELECTRODES MODIFIED WITH OXIDIZED SWCNT DECORATED WITH GRAPHENE QD**
HERSTELLUNG VON SIEBDRUCKELEKTRODEN, MODIFIZIERT MIT OXIDIERTEM SWCNT, DEKORIERT MIT GRAPHEN QD
PRÉPARATION D'ÉLECTRODES SÉRIGRAPHIÉES MODIFIÉES AVEC DES SWCNT OXYDÉS DÉCORÉS DE GRAPHÈNE QD

(30) Priority: 21.12.2023 RO 202300864
(43) Date of publication of application: 25.06.2025
(73) Proprietor: Institutul National de Cercetare-Dezvoltare pentru Fizica Materialelor (INCDFM), 077125 Magurele (RO)
(72) Inventor: BAIBARAC, Mihaela, Bucuresti, Sector 3 (RO); PARASCHIV, Mirela, Magurele, Jud. Ilfov (RO); FLORICA, Stefania, Bucovat, Jud. Dolj (RO); FEJER, Szilard, Sf. Gheorghe, Jud. Covasna (RO)
(74) Representative: Enescu, Miruna

(56) References cited:
- VALIPOUR AKRAM ET AL: "Using silver nanoparticle and thiol graphene quantum dots nanocomposite as a substratum to load antibody for detection of hepatitis C virus core antigen: Electrochemical oxidation of riboflavin was used as redox probe", vol. 89, 1 March 2017 (2017-03-01), Amsterdam , NL, pages 946 - 951, XP093224106, ISSN: 0956-5663, Retrieved from the Internet <URL:https://pdf.sciencedirectassets.com/271399/1-s2.0-S0956566316X00127/1-s2.0-S0956566316309691/main.pdf?X-Amz-Security-Token=IQoJb3JpZ2luX2VjEGIaCXVzLWVhc3QtMSJIMEYCIQDkZw50+vM5xKJhGYtPJvAbTEhZNsl/Tp3fip/SebYpaAIhAI1Cnk5VoAcNK0+lEYXX0ozY9bbtg9c2YySUDXWJsoksKrwFCOv//////////wEQBRoMMDU5MDAzNTQ2ODY1Igxxn> DOI: 10.1016/j.bios.2016.09.086
- PUSOMJIT PANNAPORN ET AL: "Electrochemical immunoassay for detection of hepatitis C virus core antigen using electrode modified with Pt-decorated single-walled carbon nanotubes", vol. 189, no. 9, 19 August 2022 (2022-08-19), Vienna, XP093224269, ISSN: 0026-3672, Retrieved from the Internet <URL:https://link.springer.com/article/10.1007/s00604-022-05400-8/fulltext.html> DOI: 10.1007/s00604-022-05400-8
- SERAFÍN V ET AL: "Graphene quantum dots-functionalized multi-walled carbon nanotubes as nanocarriers in electrochemical immunosensing. Determination of IL-13 receptor [alpha]2 in colorectal cells and tumor tissues with different metastatic potential", SENSORS AND ACTUATORS B: CHEMICAL, vol. 284, 4 January 2019 (2019-01-04), pages 711 - 722, XP085613334, ISSN: 0925-4005, DOI: 10.1016/J.SNB.2019.01.012
- RICHA RASTOGI ET AL: "Interfacing of DNA with carbon nanotubes for nanodevice applications", MATERIALS CHEMISTRY AND PHYSICS, ELSEVIER SA, SWITZERLAND, TAIWAN, REPUBLIC OF CHINA, vol. 135, no. 2, 6 May 2012 (2012-05-06), pages 268 - 276, XP028414751, ISSN: 0254-0584, [retrieved on 20120512], DOI: 10.1016/J.MATCHEMPHYS.2012.05.020

## Description

The invention relates to a process for the preparation of screen-printed electrodes modified with oxidized single-walled carbon nanotubes (SWNTs) decorated with graphene quantum dots (GQDs) for applications in the field of electrochemical biosensors, e.g. for sensors dedicated to the detection of hepatitis B virus (HBV).

Sensors reported up to now for the detection of hepatitis B virus were aimed at detecting polymerase reaction fragments ("polymerase chain reaction" (PCR)) [C.C. Chen, Z.L. Lai, G.J. Wang, C.Y. Wu, Polymerase chain reaction-free detection of hepatitis B virus DNA using a nanostructured impedance biosensor, Biosens. Bioelectron., 77 (2016), pp. 603-608; L. Yang, M. Li, F. Du, G. Chen, A. Yasmeen, Z. Tang, A novel colorimetric PCR-based biosensor for detection and quantification of hepatitis B virus, Meth. Mol. Biol., 1571 (2017), pp. 357-369]. A disadvantage of using the PCR method is that it is very expensive, requiring equipment to be operated by highly specialized personnel.

To overcome this drawback, sustained efforts have been made to develop electrochemical biosensors based on: i) glassy carbon electrode modified with graphene quantum dots (GQDs) [Q. Xiang, J. Huang, H. Huang, W. Mao, Z. Ye, A label-free electrochemical platform for the highly sensitive detection of hepatitis B virus DNA using graphene quantum dots. RSC Adv. 2018, 8, 1820; J. Wen, M. Li, J. Xiao, C. Liu, Z. Li, Y. Xie, P. Ning, H. Cao, Y. Zhang, Novel oxidative cutting graphene oxide to graphene quantum dots for electrochemical sensing application. Mater. Today Commun. 2016, 8, 127-13] and ii) electrodes modified with DNA [Y. Yang, C. Li, L. Yin, M. Liu, Z. Wang, Y. Shu, G. Li, Enhanced Charge Transfer by Gold Nanoparticle at DNA Modified Electrode and Its Application to Label-Free DNA Detection. ACS Appl. Mater. Interfaces 2014, 6, 7579-7584].
Article "Using silver nanoparticles and thiolgraphene quantum dots nanocomposite as a substratum to load antibody for detection of hepatitis C virus core antigen: Electrochemical oxidation of riboflavin was used as a redox probe", by VALIPOUR AKRAM ET AL, discloses the employ of silver nanoparticles (AgNPs) and thiol grapheme quantum dots (GQD-SH_ for the detection of hepatitis C virus core antigen.
Article "Electrochemical immunoassay for detection of hepatitis C virus core antigen using electrode modified with PT-decorated single-walled carbon nanotubes", by PUSOMJIT PANNAPORN ET AL DISCLOSES Pt nanoparticles deposited on single-walled carbon nanotubes (PtSWCNTs) as substrate for immobilizing antibodies on an electrode surface.

The present invention relates to another type of electrode that can be used to increase the yield and accuracy of electrochemical detection in general and hepatitis B virus detection in particular, namely a screen-printed carbon modified electrode modified with oxidized SWNTs and decorated with GQD and to a process for producing such electrodes.

In a first aspect, the present invention relates to a process for producing screen-printed electrodes modified with oxidized single-walled carbon nanotubes decorated with graphene quantum dots, the process comprising the following steps:
**a)** reacting single-walled carbon nanotubes (SWNTs) with a mixture of HNO₃ and HCl acids to obtain SWNTs functionalized with carboxyl groups (abbreviated as SWNT-COOH), according to the reaction (1): 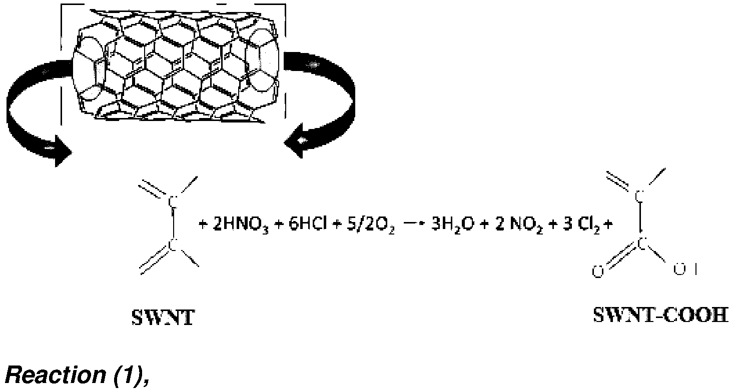 the obtained SWNT-COOHs are then filtered, brought to a pH of 7, and dried up to a powder;
**b)** annealing in air the SWNT-COOH obtained in step a) at a temperature in the range 90-120°C, preferably 100°C, to obtain graphene quantum dots functionalized with carboxyl groups (represented by the abbreviated formula GQD-COOH),
**c)** reacting GQD-COOH obtained in step b) with cysteamine, according to reaction (2): 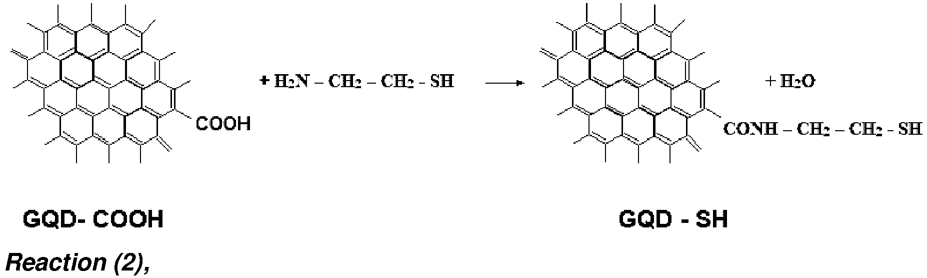 to obtain graphene quantum dots functionalized with thiol groups (represented by the abbreviated formula GQD-SH), which are then filtered and dispersed in an organic solvent, preferably in dimethylformamide (DMF);
**d)** reacting single-walled carbon nanotubes (SWNTs) with a mixture of KMnO₄ and H₂SO₄ according to reaction (3): 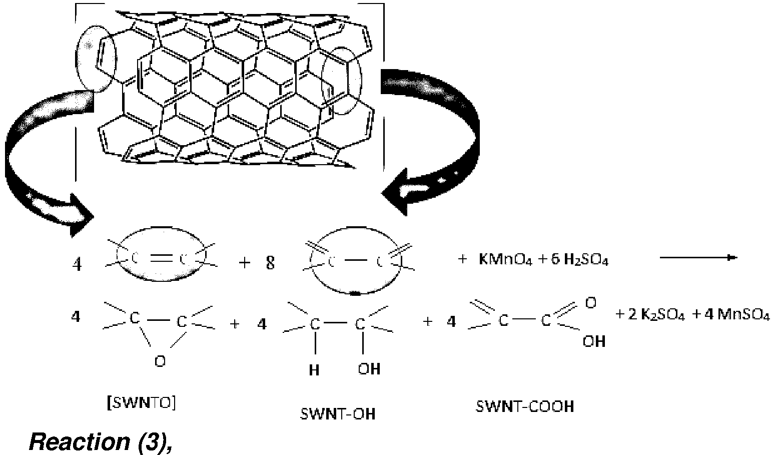 to obtain oxidized SWNT, wherein the abbreviated formula "oxidized SWNTs" means a mixture of: SWNTs functionalized with epoxy groups (abbreviated as SWNTO), SWNTs functionalized with hydroxyl groups (abbreviated as SWNT-OH) and SWNTs functionalized with carboxyl groups (abbreviated as SWNT-COOH);
   the oxidized SWNTs thus obtained are filtered, brought to a pH of 7, and dried up to the powder state;
**e)** dispersing the oxidized SWNTs obtained in step d) in an organic solvent, preferably dimethylformamide (DMF), followed by their deposition on the surface of a screen-printed carbon electrode (SPCE) by the drop casting method, resulting in SPCEs modified with oxidized SWNTs;
**f)** addition, by drop-casting, to the "oxidized SWNT"-modified SPCEs obtained in step e) of an aqueous solution of 1-ethyl-3-(3-dimethylaminopropyl)carbodiimide (EDC) in a concentration of 0.5-1.5 mM, preferably 1 mM, which will react with SWNT-COOH, according to reaction (4): 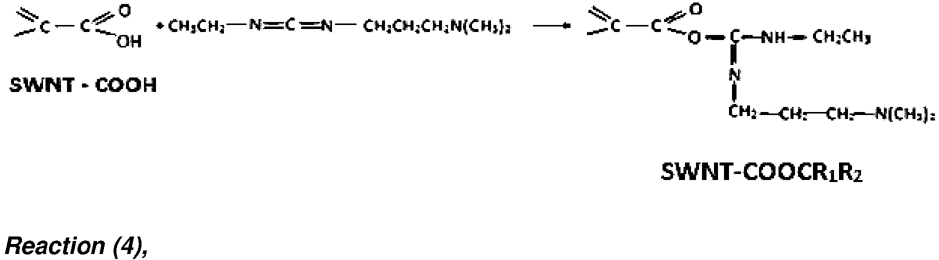 with the conversion of SWNT-COOH into SWNTs functionalized at the ester moieties with groups R₁ and R₂ (abbreviated as SWNT-COOCR₁R₂), where R₁ denotes -NH-CH₂-CH₃ and R₂ denotes =N-(CH₂)₃-N(CH₃)₂;
**g)** depositing by drop casting the GQD-SH obtained in step c) on the surface of the modified SPCEs obtained further to the previous steps, resulting in the functionalization of SWNTO, SWNT-OH and SWNT-COOCR1R2 with GQD-SH according to reactions (5), (6) and (7), respectively: 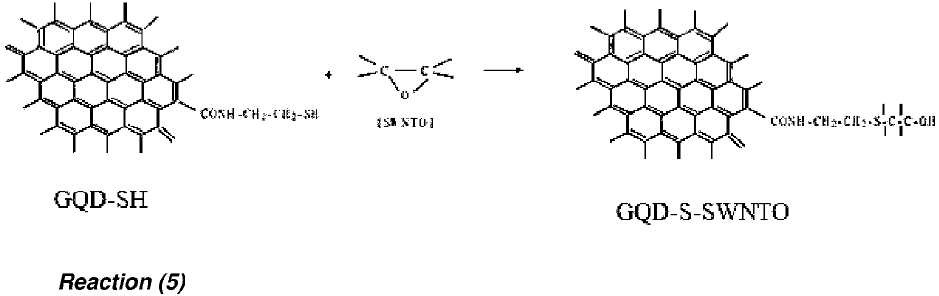 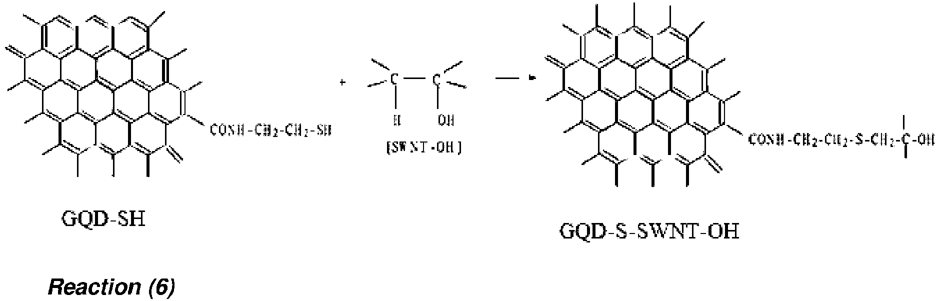 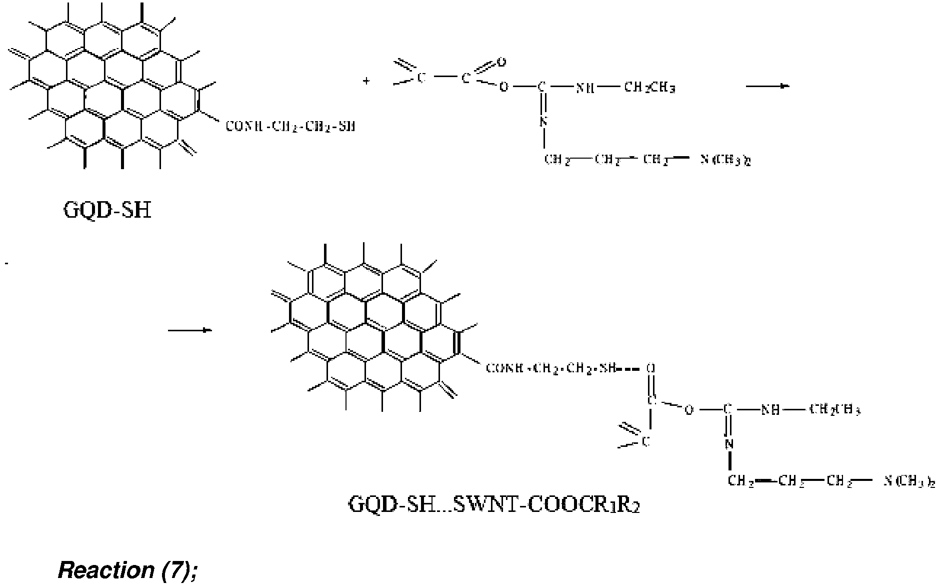 further to reactions (5), (6) and (7) resulting in " SPCEs modified with GQD-SH-decorated oxidized SWNTs", i.e. SPCEs modified with a mixture of functionalized SWNTs having the structures labeled as GQD-S-SWNTO, GQD-S-SWNT-OH, and GQD-SH...SWNT-COOCR₁R₂, where R₁ and R₂ have the meanings defined above.

In a preferred embodiment, the process according to the invention comprises the further step:
**h)** anchoring to the SPCEs modified with oxidized SWNTs decorated with GQD-SH obtained in step (g), by the drop casting method, of 10-30 µl, preferably 25 µl per electrode of Ag nanoparticles with an average size of 10 nm, obtaining compounds according to the following formulae 8.1, 8.2 and 8.3:

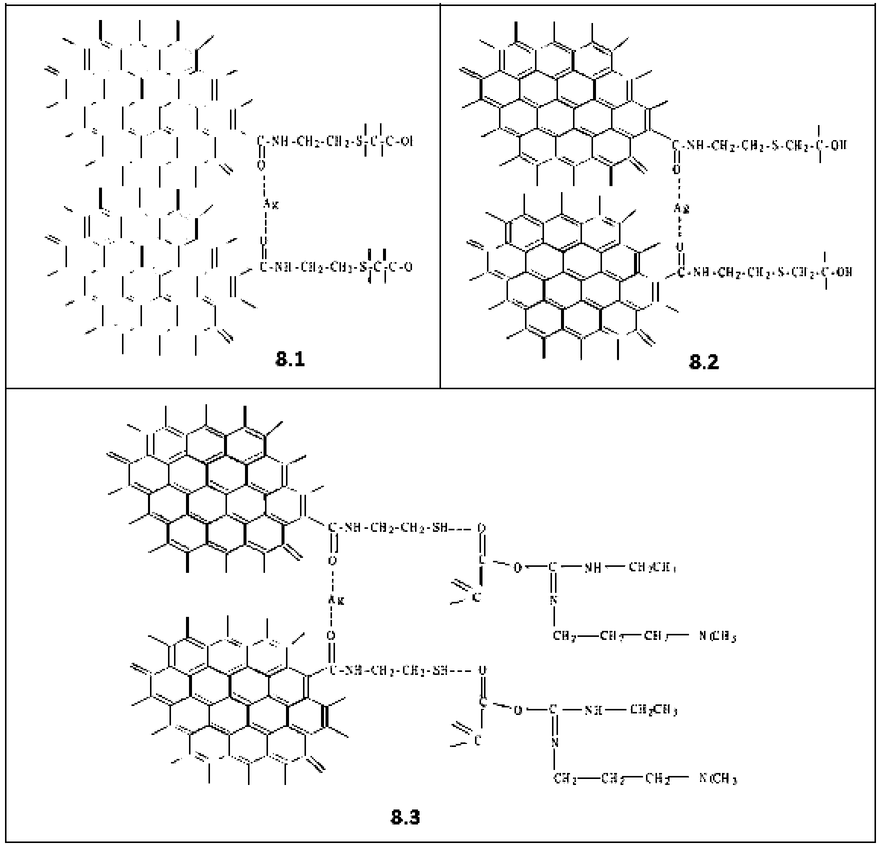

In step a) of the process according to the invention, purified single-walled carbon nanotubes (SWNTs) are reacted with a mixture of acids in order to graft COOH groups thereon. Preferably, the mixture of HNO₃ and HCl acids is in the form of a mixture of 68-90% HNO₃ solution and 36.5-38% HCl solution, the solutions being in a volumetric ratio of HNO₃ : HCl of 1 : 3, and the concentration of purified SWNTs reacting with the mixture of acids is in the range of 0.5-2 mg/ml acid mixture. The reaction in step a) preferably takes place at normal temperature and pressure under homogenizing conditions. In a preferred embodiment, the homogenization is carried out by ultrasonication for 5 min. followed by magnetic stirring for 10 min. In a preferred embodiment, the resulting single-walled carbon nanotubes functionalized with COOH groups, abbreviated as SWNT-COOH, are washed with distilled water to bring them to a pH of 7, and then are dried to up to a powder by drying using a oven at 60°C for 1 hour, followed by vacuum drying at 100°C for 2 hours.

In step b) of the process, the fracturing of SWNT-COOH obtained in step a) is achieved thermally at 90-120°C, preferably 100°C, resulting into a multitude of graphene quantum dots having COOH groups, represented by the formula GQD-COOH. Thus, the resulting GQD-COOH contain both graphene-specific C - C and C = C bonds and COOH functional groups.

In step c) of the process, the GQD-COOH obtained in step b) are reacted with cysteamine to obtain thiol-functionalized graphene quantum dots, abbreviated as GQD-SH, as shown in Reaction (2) above.

In a preferred embodiment, in *Reaction* (2), the weight ratio (g/g) of GQD-COOH : cysteamine is in the range of 0.5-2 g/g. The reaction takes place in an organic solvent, preferably ethanol, for a time interval of 20-30 hours, preferably 24 hours. The obtained GQD-SH is then filtered and dispersed in an organic solvent, preferably dimethyl formamide (DMF), obtaining a solution of GQD-SH in DMF having a concentration in the range of 0.5-2 mg/ml, for use in subsequent steps.

In step d) of the process according to the invention, the SWNTs are reacted with a mixture of KMnO₄ and H₂SO₄ to obtain the mixture of oxidized SWNTs according to *Reaction (3)*. In one embodiment, to obtain oxidized SWNTs according to this step, 1-3 mg/ml SWCNTs are added to an aqueous mixture of KMnO₄ (7-9 mM, preferably 8 mM) and H₂SO₄ (0.2-0.4M, preferably 0.32 M) at normal temperature and pressure under homogenization. In a preferred embodiment, the homogenization is carried out by ultrasonication for about 5 minutes followed by magnetic stirring for about 10 minutes. Preferably, the oxidized SWNTs obtained are then washed with distilled water until they are brought to a pH of about 7, and then dried to constant mass when they are in the powder state using oven drying at 60°C for 1 hour followed by vacuum drying at 100°C for 2 hours.

In step e), the mixture of the three types of oxidized SWNTs obtained in step d), diluted in an organic solvent, preferably dimethylformamide (DMF), is deposited on the working electrode surface of a screen-printed carbon electrode (SPCE) by the drop casting method, well known to the person skilled in the art. The SPCE electrodes are well known to the specialist, and readily available. This produces SPCEs modified with all three types of oxidized SWNTs. In one embodiment, oxidized SWNTs are dispersed in the organic solvent at a concentration in the range of 1-3 mg/ml. In a preferred embodiment, the volume of oxidized SWNTs dispersed in the organic solvent DMF deposited by drop-casting onto the surface of one SPCE is in the range of 10-30 µl, preferably 25 µl.

In step f) of the process according to the invention, ethyl dimethyl carbodiimide (EDC) is added by drop-casting to the oxidized SWNTs deposited on SPCE. In a preferred embodiment, about 10-30 µl of 0.5-1.5 mM, preferably 1 mM, EDC is added per electrode. Of the three types of oxidized SWNTs, EDC reacts only with SWNT-COOH, while the epoxy and hydroxyl groups of SWNTO and SWNT-OH, respectively, remain unchanged. The reaction of SWNT-COOH with EDC leads to the functionalization of SWNT with new functional groups of the type amine (-NH-) and imine (-C=N) by the grafting to carboxyl groups at the groups R₁, which correspond to -NH-CH₂-CH₃, and R₂ which corresponds to =N-(CH₂)₃-N(CH₃)₂.

This step therefore leads to the conversion of the carboxyl groups of SWNT-COOH into ester groups (-COO-) simultaneously with the insertion of functional groups amine (-NH-, -CH₂-N(CH₃)₂) and imine (-C=N-). The advantage of obtaining ester groups is that they form with GQD-SH only hydrogen bonds.

In step g), the GQD-SHs obtained in step c) are deposited by drop-casting on the surface of the SPCEs modified with the three types of oxidized SWNTs obtained at the end of step f) (namely those with the formulas SWNTO, SWNT-OH and SWNT-COOCR₁R₂). To this aim, in a preferred embodiment, the GQD-SH are first filtered from the mixture resulting from *Reaction (2)* and then dispersed in an organic solvent, preferably dimethyl formamide (DMF), the solution of GQD-SH in DMF having a concentration in the range of 0.5-2 mg/ml. Approximately 25 µl of the obtained dispersion is deposited per electrode by the drop-casting method, and thus reactions (5), (6) and (7) above take place for about 10 minutes. Reactions (5), (6) and (7) result in "GQD-SH-decorated oxidized SWNT-modified SPCEs", i.e., SPCEs modified with a mixture of functionalized SWNTs having the structures labeled as GQD-S-SWNTO, GQD-S-SWNT-OH, and GQD-SH...SWNT-COOCR₁R₂, wherein R₁ and R₂ have the meanings defined above.

Thus, SCPEs modified with oxidized SWNTs decorated with GQD-SH obtained by the process according to the invention, have simultaneously functional groups of the type amide (-CONH-), amine (-NH-, -CH₂-N(CH₃)₂), imine (-C=N-), hydroxyl (-OH), thioether (-CH₂-S-CH₂₋), ether (-COO-) and thiol (-CH₂-SH), which allows an increase in the range of use, sensitivity, efficiency and detection capability of a sensor equipped with the resulting electrode.

In a preferred embodiment, the process according to the invention comprises the additional step h) of anchoring to the SPCEs modified with GQD-SH decorated oxidized SWNTs obtained after step g), by drop casting method, of Ag nanoparticles with an average size of 10 nm, being added between 10-30 µl, preferably 25 µl Ag nanoparticles per electrode, for the creation of Ag bridges between functional groups Thus, the presence of Ag nanoparticles leads to an increase in the reactivity of the electrode surface, by increasing electron transfer at the electrode-electrolyte interface, which has the direct effect of increasing the sensitivity and efficiency of the sensor equipped with the electrode produced according to the process.

The process for preparing screen-printed carbon electrodes modified with oxidized single-walled carbon nanotubes decorated with graphene quantum dots according to the invention has the advantage that it leads to the modification of the functional groups of the oxidized single-walled carbon nanotubes, thus allowing these electrodes to be used as electrochemical sensors exhibiting high sensitivity in the detection of viruses, and in particular HBV. The use of oxidized SWNTs for the anchoring of GQD-SH allows to significantly increase the number of amide, imide, imine, thiol and thioether functional groups. The obtained functional groups are of great interest for electrochemical sensors used in laboratory medical analysis in general, and specifically in HBV virus detection for adoption of HBV antibody binding strategies on the surface of screen-printed electrodes modified with oxidized single-walled carbon nanotube and decorated with graphene quantum dots.

In another aspect, the present invention relates to screen-printed electrodes modified with single-walled carbon nanotubes oxidized and decorated with graphene quantum dots functionalized with the groups amide (-CONH-), amine (-NH-, -CH₂-N(CH₃)₂), imine (-C=N-), hydroxyl (-OH), thioether (-CH₂-S-CH₂₋), ether (-COO-) and thiol (-CH₂-SH), obtained by the process above described
In another aspect, the present invention relates to the use of screen-printed electrodes modified according to the invention as electrochemical sensors, and in particular as biosensors and preferably as biosensors for the detection of human anti-HBV antibodies.

### Example of a realization

In the following, it is shown a non-limiting example of the realization of the invention, in connection also with the figures, which represent:
**Figure 1** shows Raman spectra of SWNT (a), "oxidized SWNT" (SWNT-OX) (b) and SWNT-COOH (c), recorded at the excitation wavelengths of 1064 nm.
**Figure 2** shows Raman spectra of SWNT (a), SWNT-COOH (b) and SWNT-OX (c), recorded at the excitation wavelength of 676 nm.
**Figure 3** shows IR spectra of SWNT-OX (a) and SWNT-COOH (b).
**Figure 4** shows IR spectra of: a) GQD-COOH (GQD-1) and b) GQD-SH (GQD-2).
**Figure 5** shows PLE spectrum of GQD-SH.
**Figure 6** illustrates the dependence of PL spectra of GQD-SH with the excitation wavelengths: 374 nm (a) and 400 nm (b).
**Figure 7** shows Raman spectrum of GQD-COOH prepared using as carbon source SWNT-COOH (a) and GQD-SH (b) recorded at the excitation wavelength of 1064 nm.
**Figure 8** shows the PLE and PL spectra of "oxidized SWNTs" decorated with GQD-SH (a₁, a₂). The PL spectra recorded at the excitation wavelength equal to 368 nm, 377 nm and 425 nm are represented by the colors red, blue and black.
**Figure 9** shows the cyclic voltammograms of the screen-printed carbon electrode (SPCE, a), SPCE/SWNT-OX (b) and SPCE/GQD-SH (c) in the presence of the solution 5mM Fe(CN)₆ ^{3-/4-} and 0.01 M KCI.
**Figure 10** shows the cyclic voltammograms of the SPCE modified with "oxidized SWNT" and decorated with GQD-SH (a) and SPCE modified with "oxidized SWNT" decorated with GQD-SH and Ag nanoparticles (b) in the presence of the solution 5mM Fe(CN)₆ ^{3-/4-} and 0.01 M KC.I

In the present non-limiting example of the realization, the process for the preparation of SPCE modified with oxidized SWNT and decorated with GQD-SH involved the following steps:
a) obtaining SWNT-COOH involved: a₁) purification of 0.2 g SWNTs of Aldrich purity according to the protocol presented by Ryabenko et al. [Ryabenko, A.G.; Dorofeeva, T.V.; Zvereva, G.I. UV-VIS-NIR spectroscopy study of sensitivity of single-wall carbon nanotubes to chemical processing and Van-der-Walls SWNT/SWNT interaction. Verification of the SWNT content measurements by absorption spectroscopy. Carbon 2004, 42,1523-1535]; the resulting amount was about 0.16 g of purified SWNTs; a₂) preparation of a solution of HNO₃ 68% and HCl 36.5% in volumetric ratio of 1:3; a₃) addition of 0.16 g SWNTs resulting from step a₁) to the solution of HNO₃:HCl; for homogenization purposes ultrasonication was performed for 5 min. and magnetic stirring for 10 min; a₄) subsequent filtration and washing with distilled water (2 l) was carried out such that the pH of the resulting solution was equal to 7; and a₅) the drying at 60 ⁰C, using an oven, followed by drying at 100 ⁰C in vacuum for 2 hours. Reaction (1) describes the reactions that occur in the case of the preparation of SWNT-COOH.
b) obtaining graphene quantum dots containing carboxyl groups was achieved by heat treatment in air at 100 °C of SWNT-COOH, when the reaction product additionally contains the C-C and C=C bonds specific for graphene and the -COOH functional groups (abbreviated compound GQD-COOH); for the purpose of use in the following steps 100 mg GQD-COOH was dispersed in 100 ml absolute ethanol by ultrasonication at 37 kHz for one hour;
c) obtaining graphene quantum dots containing thiol groups took place by the reaction of GQD-COOH with cysteamine according to Reaction (2), the reaction product being abbreviated GQD-SH; 1 ml of GQD-COOH in ethanol with concentration of 1 mg/ml was interacted with 1 ml cysteamine in ethanol with the concentration of 1 mM for 24 h, after which filtration of the reaction mixture took place. The collected product was dispersed under ultrasonication at 37 kHz for 20 min in DMF, when a slightly greenish solution corresponding to GQD-SH was obtained.
d) obtaining "oxidized SWNTs" by reacting SWNTs with aqueous solution of KMnO₄ and H₂SO₄, when according to Reaction (3), after successive interaction with distilled water, the reaction product named "oxidized SWNTs" contains SWNTs having epoxy groups (labeled as [SWNTO]), hydroxyl groups (labeled as [SWNT-OH]) and carboxyl groups (labeled as [SWNT-COOH]). The steps for obtaining the oxidized SWNTs involved: d₁) reaction of 1.264 g of KMnO₄ with 0.32 M H₂SO₄ solution; d₂) addition of 0.16 g SWNTs resulting from step a₁) to the solution of KMnO₄ in H₂SO₄; for homogenization purposes ultrasonication was performed for 5 min. and magnetic stirring for 10 min; d₃) subsequently filtration and washing with distilled water (2 l) was carried out so that the pH of the resulting solution was equal to 7; and d₄) drying in an oven at 60 ⁰C, followed by drying at 100 ⁰C in air for 2 h. The "oxidized SWNTs" were dispersed in an organic solvent preferably DMF, the concentration of "oxidized SWNTs in DMF being equal to 2 mg/ml.
e) obtaining "SWNT oxidized" modified SPCE by drop casting method when on the surface of the SPCE are deposited 25 µl "oxidized SWNT" in DMF with a concentration of 2 mg/ml, prepared according to section d); in order to convert the carboxyl groups present in "oxidized SWNT" into ester groups, the reaction of SPCE modified with "oxidized SWNT" with 25 µl 1-ethyl-3-(3-dimethyl)aminopropyl) carbodiimide (EDC) 1 mM, takes place for 10 min. The reaction is shown by Reaction (4), when only SWNT-COOH interacts with EDC.
f) obtaining SPCE modified with "oxidized SWNT" and decorated with GQD-SH takes place by the interaction of SPCE modified with "oxidized SWNT" prepared according to the sections d) and e) with GQD-SH (25 µl, for 10 min., prepared according to section c). The reactions which occur are shown by Reactions (5), (6) and (7).
g) obtaining SPCE modified with "oxidized SWNT" decorated with GQD-SH and Ag nanoparticles is carried out in order to testing the electrochemical activity of SPCE modified with oxidized SWNTs" and decorated with GQD-SH at which are added by drop casting method 25 µl Ag nanoparticles with the average size of 10 nm. The anchoring of Ag nanoparticles on SPCE modified with "oxidized SWNTs" and decorated with GQD-SH is illustrated by Formulas 8.1, 8.2 and 8.3.The electrolyte used for testing the electrochemical activity of the SPCE/oxidized SWNT/GQD-SH/ Ag nanoparticles electrodes was solution 5 mM Fe(CN)₆^{3-/4-} and 0.01 M KCI.

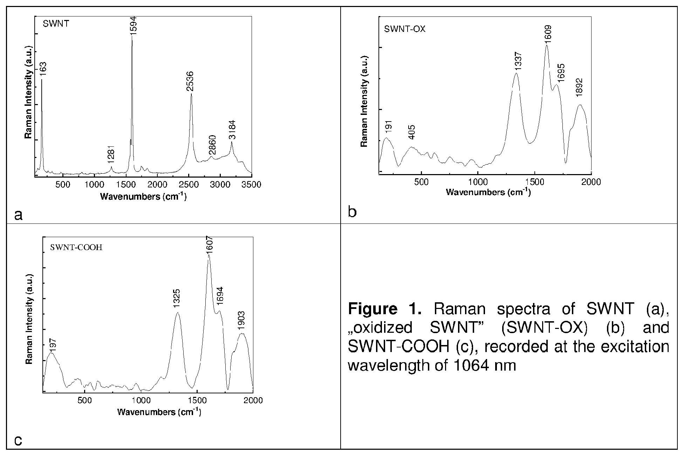

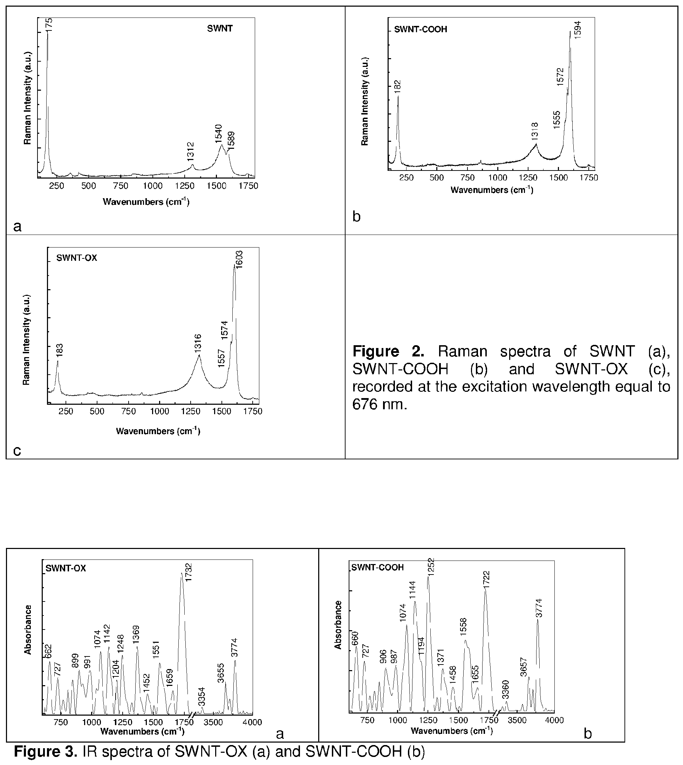

In order to highlight the reactions in the above example, Raman spectra of SWNT, SWNT-COOH and "oxidized SWNT" (abbreviated as SWNT-OX), recorded at excitation wavelengths equal to 1064 and 676 nm, are shown in Figures 1 and 2. The recording of Raman spectra at the excitation wavelength of 1064 nm was performed with a spectrophotometer MultiRam FTRaman, model MultiRam, from Bruker. The Raman spectra recorded at the excitation wavelength equal to 676 nm were recorded with the T64000 Raman spectrophotometer, from Horiba Jobin Yvon, equipped with a Kr laser.

The changes noted in Figures 1 and 2 are:
(a) at the excitation wavelength of 1064 nm,
a₁) a decrease in the Raman line intensity associated with the respiratory radial vibrational mode (RBM) [M.S. Dresselhauss, G. Dresselhauss, P.C. Eklund, Science of fullerenes and carbon nanotubes. New York: Academic, 1996] simultaneously with a shift in the maximum of this band from 163 cm⁻¹ (Figure 1a) to 191 cm⁻¹ (Figure 1b) and 197 cm⁻¹ (Figure 1c),
a₂) an increase in D-band intensity associated with disorder or defects induced by the graphitic structure of carbon nanotubes [Dresselhauss MS, Dresselhauss G, Eklund PC. Science of fullerenes and carbon nanotubes. New York: Academic, 1996] simultaneously with its displacement from 1281 cm⁻¹ (Figure 1a) to 1337 cm⁻¹ (Figure 1b) and 1325 cm⁻¹ (Figure 1c);
a₃) a change in G-band position associated with the tangential vibrational mode [Dresselhauss MS, Dresselhauss G, Eklund PC. Science of fullerenes and carbon nanotubes. New York: Academic, 1996] from 1594 cm⁻¹ (Figure 1a) to 1609 cm⁻¹ (Figure 1b) and 1607 cm⁻¹ (Figure 1c), variation accompanied by the presence of a new band at approx. 1695 cm⁻¹ (Figure 1b) and 1694 cm⁻¹ (Figure 1c) and a₄) the presence of a new Raman line in the spectral range 1700-2000 cm⁻¹, having the maximum at ~1892 cm⁻¹ (Figure 1b) and 1903 cm⁻¹ (Figure 1c);
b) at the excitation wavelength equal to 676 nm,
b₁) a decrease in the intensity of the Raman line assigned to the RBM vibrational mode simultaneously with a shift of the maximum of this line from 175 cm⁻¹ (Fig. 2a) to 182 cm⁻¹ (Fig. 2b) and 183 cm⁻¹ (Fig. 2c),
b₂) an increase in the intensity of the D band, the change accompanied of a shift of the maximum of the D band from 1312 cm⁻¹ (Figure 2a) to 1318 cm⁻¹ (Figure 2b) and 1316 cm⁻¹ (Figure 2c) and
b₃) an important change in the G-band profile, when a decrease in the band intensity associated with the Breit-Wigner-Fano (BWF) interaction is observed [M.S. Dresselhauss, G. Dresselhauss, P.C. Eklund, Science of fullerenes and carbon nanotubes. New York: Academic, 1996] simultaneously with its shift from 1540 cm⁻¹ (Figure 2a) to ~ 1555 cm⁻¹ (Figure 2b) and 1557 cm⁻¹ (Figure 2c), the variation accompanied of a shift of the band from 1589 cm⁻¹ (Figure 2a) to ~1594 cm⁻¹ (Figure 2b) and 1603 cm⁻¹ (Figure 2c) and
b₄) a variation of the ratio between the intensities of the Raman bands peaked at 1589-1603 cm⁻¹ and 1540-1557 cm⁻¹ from 1.18 (Figure 2a) to 0.36 (Figure 2b) and 0.24 (Figure 2c).
In conclusion, Figures 1 and 2 show significant changes in the spectral range, which testify to the increase in the disorder degree at the nanotube surface as a result of the presence of functional groups, demonstrating that functional groups have attached to SWNTs, both for metallic and semiconducting nanotubes

The IR spectra of SWNT-OX and SWNT-COOH have been recorded with a FTIR spectrophotometer, Vertex 70 model, from Bruker. The theoretically calculated SWNT IR bands and their vibration modes were determined to be localized at 670-691-774-775, 870-876, 905-970, 1034, 1110-1130, 1248-1261-1365-1370, 1455, 1499-1501, 1582-1588 and 1710-1750 cm⁻¹, they being attributed to the vibrational modes A₂, E₁, 2E₂₅ for tubes with chirality (15,0), 2A₁ for tubes with chirality (10,10), 2E₉ (10,10) + 2E₁₉ (15,0) + 2E₁₀ (14,7), A₂, 2E₁₂ (10,10) + 2E₆ (15,0) + 2E₉ (14,7), A₂, E₁ and 2A₁ (10,10) + 2E₆ (15,0) + 2E₂₁ (14,7) [U.J. Kim, X.M. Liu, C.A. Furtado, G. Chen, R. Saito, J. Jing, M.S. Dresselhaus, P. C. Eklund, Infrared-Active Vibrational Modes of Single-Walled Carbon Nanotubes, Phys. Rev. Lett. 95, 157402, 2005].
In comparison with the reported vibrational modes of SWNTs, the IR spectra of SWNT-OX and SWNT-COOH show the following differences (Figure 3):
a) a down-shift of the IR band from 670 cm⁻¹ (SWNT) at 662 cm⁻¹ (SWNT-OX) and 660 cm⁻¹ (SWNT-COOH);
b) an up-shift of the IR band from 970 cm⁻¹ and 1130 cm⁻¹ (SWNT) to 991 cm⁻¹ and 1142 cm⁻¹ (SWNT-OX) and respectively 987 cm⁻¹ and 1144 cm⁻¹ (SWNT-COOH); and
c) the presence of new bands at 1204 cm⁻¹ and 1659 cm⁻¹ (SWNT-OX) and respectively at 1194 cm⁻¹ and 1655 cm⁻¹ (SWNT-COOH).
Comparing the IR spectra of SWNT-OX and SWNT-COOH, it is observed:
a) significant changes in the absorbance of the IR bands situated in the spectral ranges: a₁) 1000-1400 cm⁻¹ and 1700-1800 cm⁻¹ and respectively a₂) 1700-1800 cm⁻¹ and 3300-3800 cm⁻¹;
b) the IR bands localized to different wavenumbers in the case of: b₁) SWNT-COOH, they being situated at 1194, 1458, 1558, 1655, 1722 and 3360 cm⁻¹ and b₂) SWNT-OX, which are situated at 1204, 1248, 1452, 1551, 1659, 1732 and 3354 cm⁻¹;
c) the ratio between the absorbance of the IR bands situated at 3774 and 3655-3657 cm⁻¹ is equal to 2.64 in the case of SWNT-COOH and 1.65 in the case of SWNT-OX; and
d) the IR bands with the highest absorbance are in the case of: d₁) SWNT-OX, IR band with maximum at 1732 cm⁻¹ and d₂) SWNT-COOH, IR bands with maxima at 1252 and 1722 cm⁻¹, respectively. One explanation for the higher absorbance of the IR band in the spectral range 1700-1750 cm⁻¹ in the case of SWNT-OX in contrast with that reported in the case of SWNT-COOH is given taking into account reactions which take place in the case of the generation of the two compounds (reactions (1) and (3)). In the aforementioned spectral range, the vibrational stretching mode of C=O and C-OH bonds in carboxyl and hydroxyl functional groups is often reported [S. Liang, G. Li, R. Tian, Multi-walled carbon nanotubes functionalized with a ultrahigh fraction of carboxyl and hydroxyl groups by ultrasound-assisted oxidation, J. Mater. Sci. 51, 3513, 2016]. According to reactions (1) and (3), a higher share of carboxyl and hydroxyl groups is observed for the SWNT-OH compound. The IR bands having maxima at 3360-3354 cm⁻¹ and 3774 cm⁻¹ are associated with the vibrational stretching modes of the OH bond in the carboxyl and hydrogen bonding groups, respectively [R. M. Silverstein, G. C. Bassler, and T.C. Morrill, Spectrometric Identification of Organic Compounds. 4th ed. New York: John Wiley and Sons, 1981] which can appear between SWNT-COOH and SWNT-OH.
In conclusion, Figure 3 illustrates the fact that stages d) and a), respectively, of the process according to the invention have resulted in the functional groups above noted.

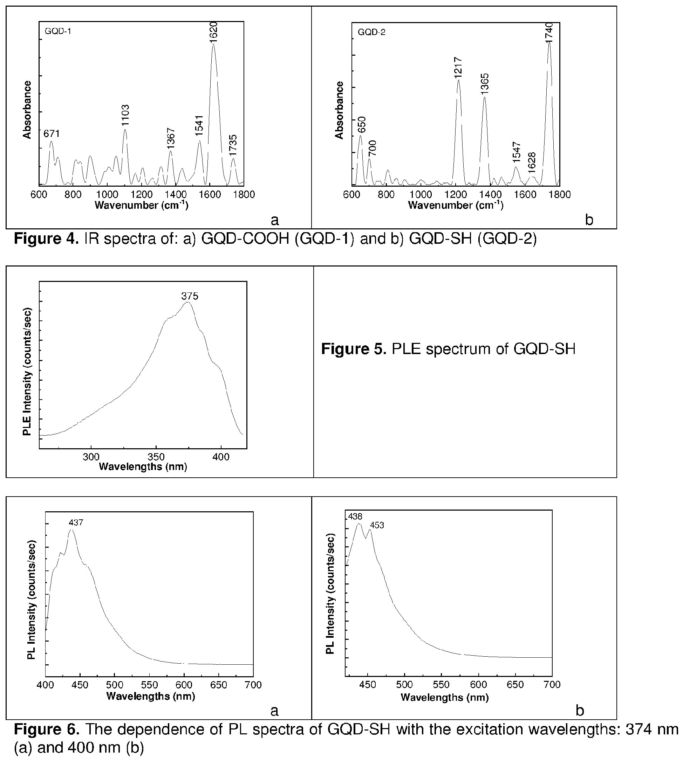

Figure 4 shows IR spectra of GQD-COOH, before and after interaction with cysteamine. According to Figure 4a, IR bands of GQD-SH are localized at 1103 cm⁻¹, 1367 cm⁻¹, 1541 cm⁻¹, 1620 cm⁻¹ and 1735 cm⁻¹, they are assigned to the vibrational stretching modes of the C-O, C=O, C=C bonds in the aromatic structure and C=O belonging to the carboxyl group. The interaction of GQD-COOH with cysteamine induces an increase in the absorbance of the IR bands located at 1365 cm⁻¹ and 1740 cm⁻¹ (Figure 4b), as a result of the transformation of the carboxyl group into amide group in GQD-SH.

The photoluminescence (PL) and photoluminescence excitation (PLE) analyses were performed using Fluorolog 3.2.2.1 spectrophotometer, from Horiba Jobin Yvon, endowed with an Xe lamp as excitation source; the measurements were performed in the geometry "right-angle". In the case of the GQD-SH sample is observed according to:
a) Figure 5, that PLE spectrum is characterized by a band with the maximum at 375 nm; and
b) Figure 6, PL the PL spectrum shows a band with maximum localized at 437 nm, which is accompanied of an emission band at 453 nm, the intensity of the two emission bands changing when the excitation wavelength is equal to 374 and 400 nm.

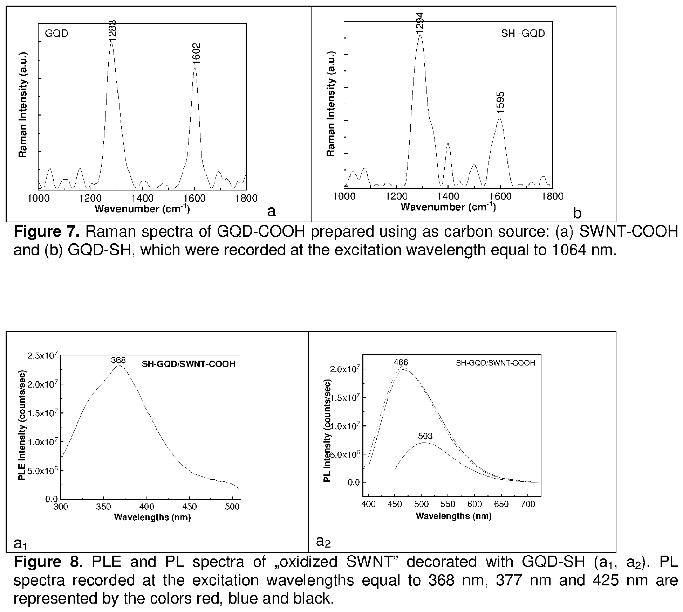

In Figure 7a one observes that Raman lines of GQD-COOH labeled in the literature as the D and G bands are located at 1282 cm⁻¹ and 1602 cm⁻¹, the intensity ratio of these Raman lines being equal to 1.21. The interaction of GQD-COOH with cysteamine induced the following changes in the Raman spectra as shown in Figure 7b:
a) a shift of the D and G bands at ~1294 cm⁻¹ and 1595 cm⁻¹; and
b) a variation of the ratio between the intensities of the D and G bands at ~2.19.
The increase in intensity of the D-band compared to the G-band was attributed to the increase in the disorder state as a consequence of defects present in the graphitic structure of GQD evidenced by the carboxyl and amide groups [F. Liu, Y. Sun, Y. Zheng, N. Tang, M. Li, W. Zhong, Y. Du, Gram-scale synthesis of high-purity graphene quantum dots with multicolor photoluminescence, RSC Adv. 5, 103428, 2015; H. Kalita, V.S. Palaparthy, M.S. Baghini, M. Aslam, Electrochemical synthesis of graphene quantum dots from graphene oxide at room temperature and its soil moisture sensing properties, Carbon 165, 9, 2020].

Figure 8 shows the PLE and PL spectra of "oxidized SWNT" decorated with GQD-SH. The
PLE and PL spectra were recorded with the Horiba Jobin Yvon Fluorolog 3.2.2.1 spectrophotometer. The emission wavelength used for recording the PLE spectra was 528 nm. The PLE spectra are characterized by a band with a maximum at 368 nm (Figure 8a). In the case of PL spectra, when the excitation wavelength is 368 nm, the emission band maximum is observed to be located at 466 nm (Figure 8b). A change in the emission band is observed when the excitation wavelength is equal to 425 nm, the maximum of the PL spectrum being localized at 503 nm (Figure 8b). The dependence of the PL spectral maximum on the excitation wavelength in the case of GQD is a behavior that has been recently reported by X. Hu et al. [X. Hu, X. Y. Ma, J. Tian, Z. Huang, Rapid and facile synthesis of graphene quantum dots with high antioxidant activity, Inorg. Chem. Commun. 122, 108288, 2020].
In conclusion, Figure 8 illustrates the optical properties of the functional groups obtained by the process according to this invention.

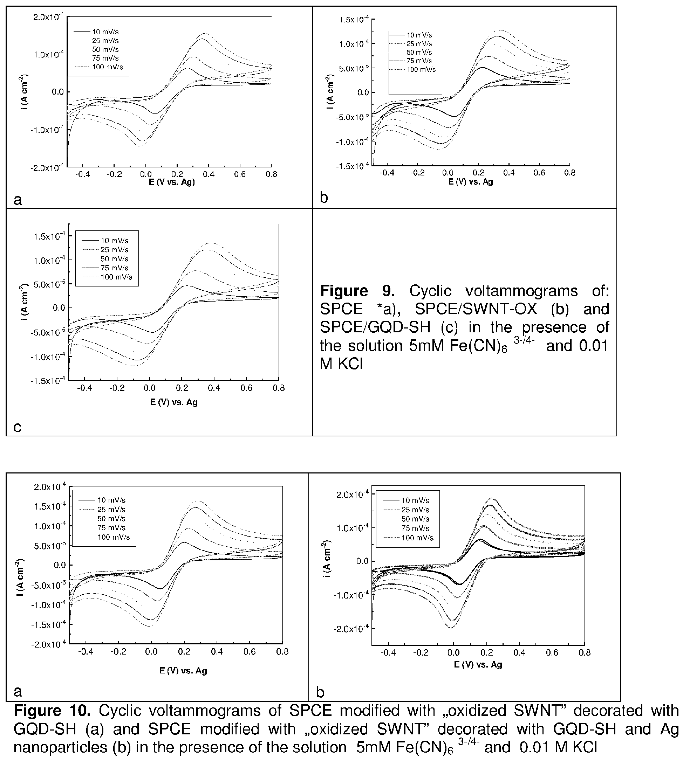

Testing of the electrochemical activity of SPCE modified with "oxidized SWNTs" decorated with GQD-SH and Ag nanoparticles was performed using a single compartment cell that was coupled to a Voltalab 80 potentiostat/galvanostat from Radiometer Analytica. Figure 9 shows the cyclic voltammograms of SPCE, SPCE modified with "oxidized SWNTs" and SPCE modified with GQD-SH in the presence of 5 mM Fe(CN)₆ ^{3-/4-} and 0.01 M KCI solution. In all cases, as the potential scan rate increases, an increase in the anode and cathode current densities is observed. This behavior is also observed in the case of Figure 10, i.e. in the case of SPCE modified with "oxidized SWNT" and decorated with GQD-SH (Figure 10a) and in the case of SPCE modified with "oxidized SWNT" and decorated with GQD-SH and Ag nanoparticles (Figure 10b), respectively. In all cases, as the potential scan rate increases, an increase in the anode and cathode current densities is observed. This behavior is also observed in the case of Figure 10, i.e. in the case of SPCE modified with "oxidized SWNT" and decorated with GQD-SH (Figure 10a) and in the case of SPCE modified with "oxidized SWNT" and decorated with GQD-SH and Ag nanoparticles (Figure 10b), respectively. Focusing attention on the changes in cyclic voltammograms at the same potential scan rate, e.g. 100 mV/s, one observes for electrodes: i) SPCE, the current densities of the oxidation and reduction maxima are equal to 1.14 x 10⁻⁴ A cm⁻² and 1.3 x 10⁻⁴A cm⁻² while the maximum oxidation and reduction potential is localized at +0.366 V and -0.024 V (Figure 9a); ii) SPCE modified with "oxidized SWNT", the current densities of the oxidation and reduction maxima are equal to 1.15 x 10⁻⁴A cm⁻² and 1.04 x 10⁻⁴A cm⁻² while the maximum oxidation and reduction potential is localized at +0.329 V and -0.045 V (Figure 9b); iii) SPCE modified with GQD-SH, the current densities of the oxidation and reduction maxima are equal to 1.22 x 10⁻⁴A cm⁻² and 1.084 x 10⁻⁴A cm⁻² while the maximum oxidation and reduction potential is localized at +0.354 V and -0.076 V (Figure 9c); iv) SPCE modified with "oxidized SWNT" and decorated with GQD-SH, the current densities of the oxidation and reduction maxima are equal to 1.63 x 10⁻⁴A cm⁻² and 1.54 x 10⁻⁴A cm⁻² while the maximum oxidation and reduction potential is localized at +0.272 V and -0.025 V (Figure 10a) and v) SPCE modified with "oxidized SWNT" and decorated with GQD-SH and Ag nanoparticles, the current densities of the oxidation and reduction maxima are equal to 1.89 x 10⁻⁴A cm⁻² and 1.97 x 10⁻⁴A cm⁻² while the maximum oxidation and reduction potential is localized at +0.228 V and -0.018 V (Figure 10b). The increase in oxidation peak current density of SPCE modified with "oxidized SWNT" and decorated with GQD-SH and Ag nanoparticles compared to the other electrodes analyzed indicates an increase in electrode surface area and electron transfer from the electrode/electrolyte interface.

## Claims

1. Process for the production of screen-printed electrodes modified with oxidized single-walled carbon nanotubes decorated with graphene quantum dots, said process comprising the following steps:
a) reacting single-walled carbon nanotubes (SWNTs) with a mixture of HNO₃ and HCl acids to obtain SWNTs functionalized with carboxyl groups (abbreviated as SWNT-COOH), according to reaction (1): 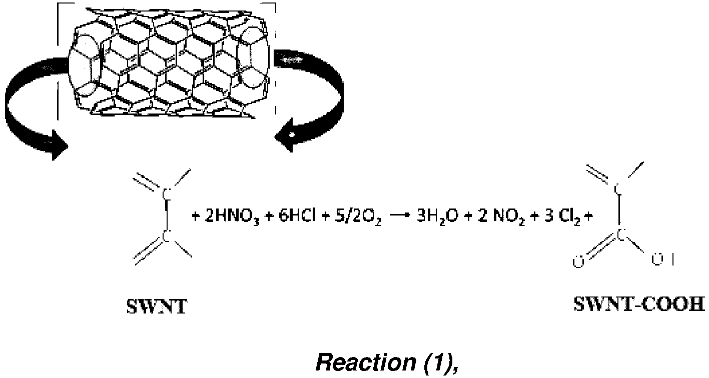 SWNT-COOH obtained are then filtered, brought to a pH of 7, and dried up to powder state;
**b)** annealing treatment in air of the SWNT-COOH obtained in step a) at a temperature in the range of 90-120°C, preferably 100°C, to obtain carboxyl groups-functionalized graphene quantum dots (abbreviated as GQD-COOH),
**c)** reacting GQD-COOH obtained in step b) with cysteamine according to reaction (2): 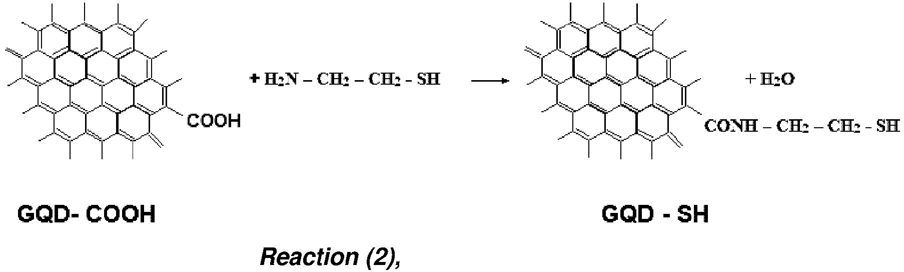 to obtain thiol-functionalized graphene dots (abbreviated as GQD-SH), which are filtered and dispersed in an organic solvent, preferably dimethylformamide (DMF);
**d)** reacting single walled carbon nanotubes (SWNT) with a mixture of KMnO₄ and H₂SO₄ according to reaction (3): 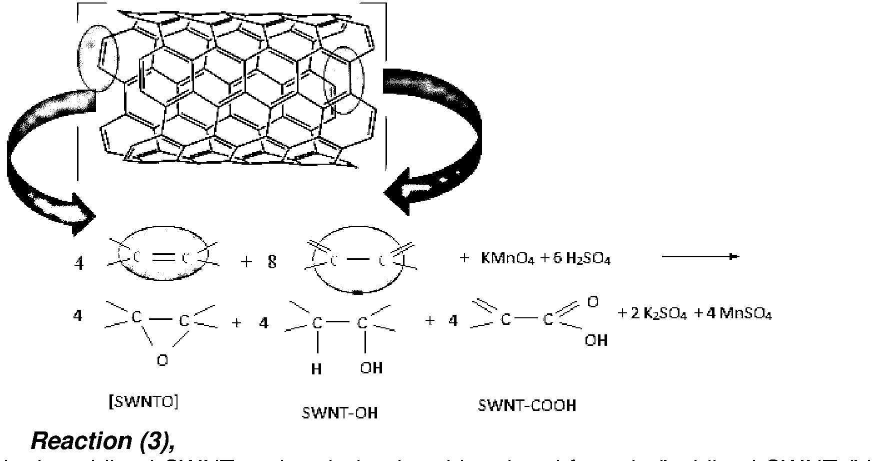 to obtain oxidized SWNTs, wherein by the abbreviated formula "oxidized SWNTs" is meant a mixture composed of: SWNTs functionalized with epoxy groups (abbreviated as SWNTO), SWNTs functionalized with hydroxyl groups (abbreviated as SWNT-OH) and SWNTs functionalized with carboxyl groups (abbreviated as SWNT-COOH);
the oxidized SWNTs thus obtained are filtered, brought to a pH of 7, and dried to a powder;
**e)** dispersing the oxidized SWNTs obtained in step d) in an organic solvent, preferably dimethylformamide (DMF), followed by their deposition on the surface of a screen-printed carbon electrode (SPCE) by the "drop casting" method, resulting in SPCE modified with oxidized SWNTs;
**f)** addition, by the drop-casting method, to the "oxidized SWNT-modified SPCEs obtained in step e) of an aqueous solution of 1-ethyl-3-(3-dimethylaminopropyl)carbodiimide (EDC) in a concentration of 0.5-1.5 mM, preferably 1 mM, which will react with SWNT-COOH according to the reaction (4): 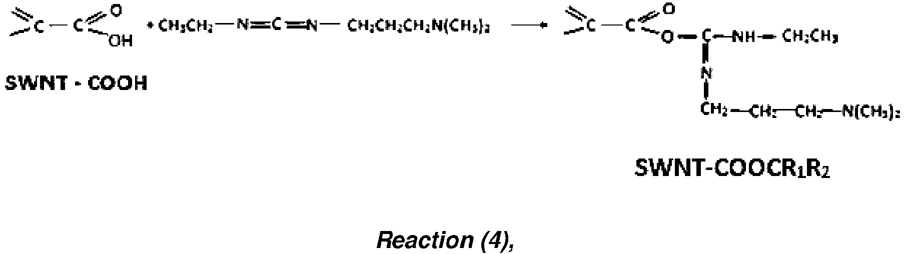 with the transformation of SWNT-COOH in SWNTs functionalized at the ester moiety with radicals R₁ and R₂ (noted in SWNT-COOCR₁R₂), wherein R₁ is -NH-CH₂-CH₃ and R₂ is =N-(CH₂)₃-N(CH₃)₂;
**g)** deposition onto the surface of SPCEs modified obtained in the previous step of GQD-SH obtained in the step c), by the "drop-casting" method, resulting in the functionalization of SWNTO, SWNT-OH and SWNT-COOCR₁R₂ with GQD-SH according to reactions (5), (6) and (7), respectively: 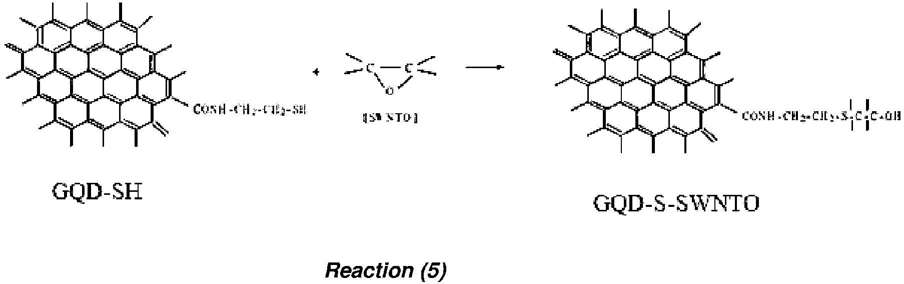 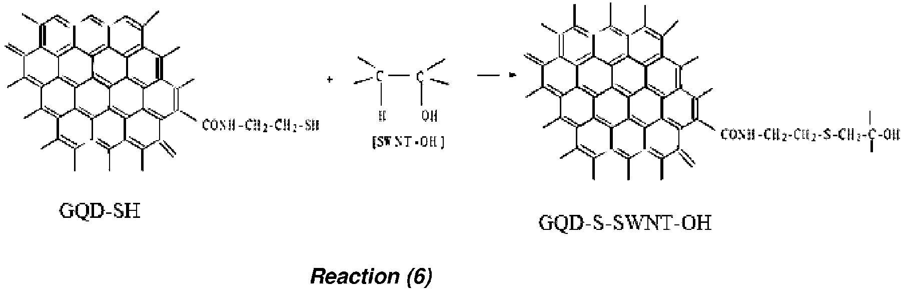 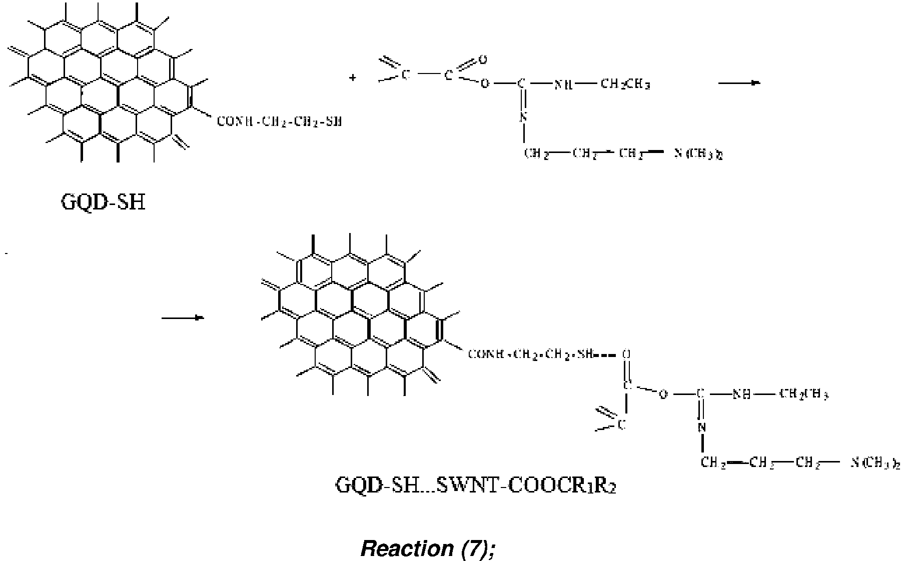 further to reactions (5), (6) and (7), "SPCEs modified with oxidized SWNTs decorated with GQD-SH" are obtained, i.e. SPCEs modified with a mixture of functionalized SWNTs having the above structures labeled GQD-S-SWNTO, GQD-S-SWNT-OH, and GQD-SH...SWNT-COOCR₁R₂, where R1 and R2 have the meanings defined above.

2. The process of producing electrodes according to claim 1 comprising the further step:
(h) anchoring to the SPCEs modified with oxidized SWNTs decorated with GQD-SH obtained in step (g), by the drop casting method, of 10-30 µl, preferably 25 µl per electrode of Ag nanoparticles with an average size of 10 nm, obtaining compounds according to the following formulae 8.1, 8.2 and 8.3:

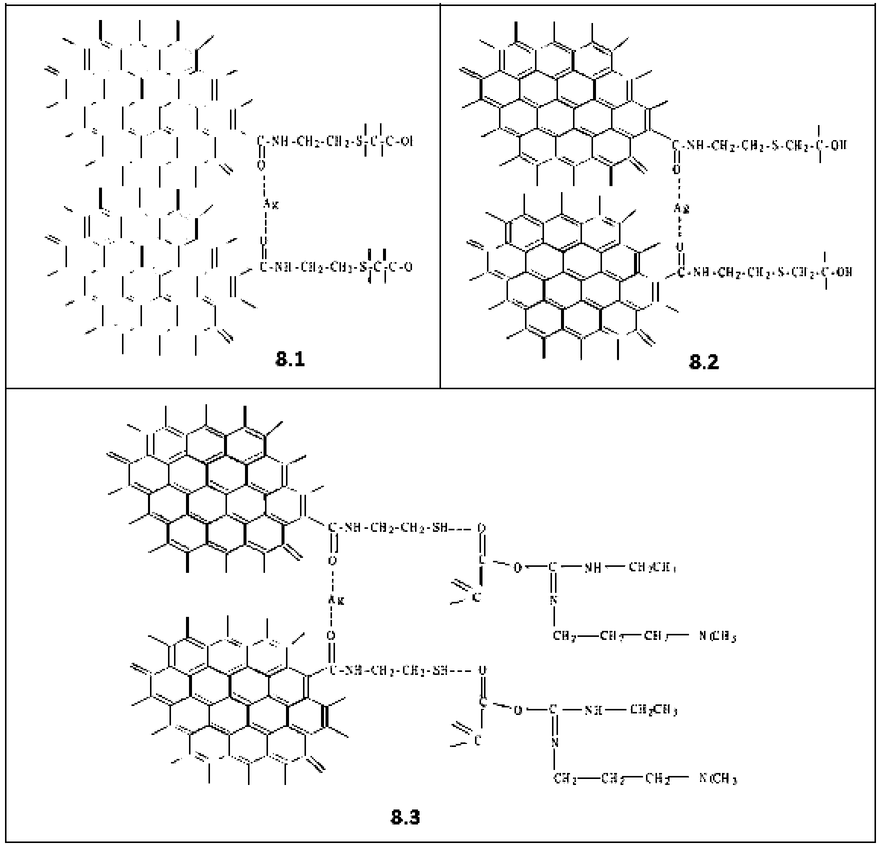

3. Process according to any one of the preceding claims, wherein in step a), the mixture of acids HNO₃ and HCl is in the form of a mixture of HNO₃ solution 68-90% and HCl solution 36.5-38%, said solutions being in a volumetric ratio of HNO₃ : HCl of 1 : 3, and the concentration of purified SWCNTs reacting with the mixture of acids is in the range of 0.5-2 mg/ml acid mixture.

4. Process according to any one of the preceding claims, wherein *Reaction (2)* takes place in an organic solvent, preferably ethanol, for a time interval of 20-30 hours, preferably 24 hours, and the weight ratio (g/g) GQD-COOH : cysteamine is in the range of 0.5-2 g/g.

5. Process according to any of the preceding claims, wherein in *Reaction (3),* 1-3 mg/ml SWNTs are added to an aqueous mixture of KMnO₄ (7-9 mM, preferably 8 mM) and H₂SO₄ (0.2-0.4M, preferably 0.32 M) at normal temperature and pressure, under homogenization.

6. Screen-printed carbon electrodes modified with oxidized single-walled carbon nanotubes decorated with graphene quantum dots obtained by the process according to any of the preceding claims.

7. The use of screen-printed carbon electrodes modified with oxidized single-wall carbon nanotubes decorated with graphene quantum dots according to claim 6 as electrochemical sensors, in particular as biosensors, preferably for the detection of anti-hepatitis B virus (anti-HBV) antibodies.

## Patentansprüche

1. Verfahren zur Herstellung von Siebdruckelektroden, die mit oxidierten, mit Graphen-Quantenpunkten dekorierten einwandigen Kohlenstoffnanoröhren modifiziert sind, wobei das Verfahren die folgenden Schritte umfasst:
a) Umsetzung von einwandigen Kohlenstoffnanoröhren (SWNTs) mit einem Gemisch aus HNO₃ und HCl, um mit Carboxylgruppen funktionalisierte SWNTs (abgekürzt SWNT-COOH) gemäß Reaktion (1) zu erhalten: 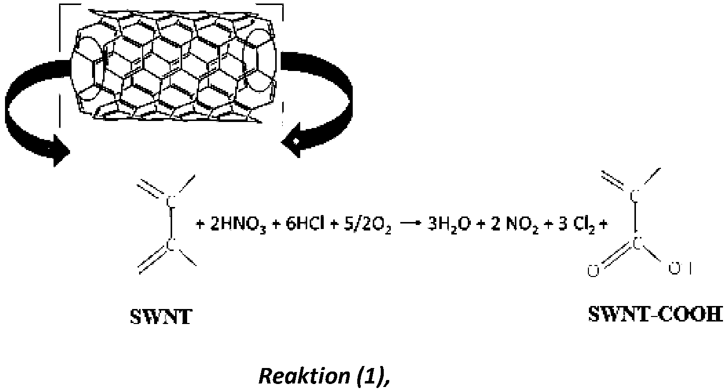 die erhaltenen SWNT-COOH werden filtriert, auf einen pH-Wert von 7 eingestellt und zu Pulver getrocknet;
b) Glühen der in Schritt a) erhaltenen SWNT-COOH an Luft bei einer Temperatur im Bereich von 90-120 °C, vorzugsweise 100 °C, um Carboxylgruppen-funktionalisierte Graphen-Quantenpunkte (abgekürzt GQD-COOH) zu erhalten;
c) Umsetzung der in Schritt b) erhaltenen GQD-COOH mit Cysteamin gemäß Reaktion (2): 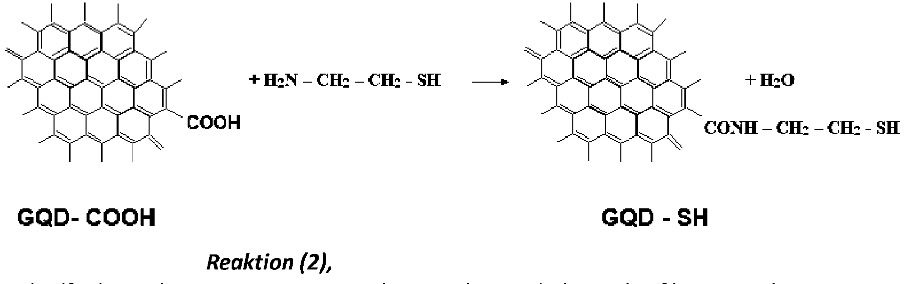 um thiolfunktionalisierte Graphen-Punkte (GQD-SH) zu erhalten, die filtriert und in einem organischen Lösungsmittel, vorzugsweise Dimethylformamid (DMF), dispergiert werden;
d) Umsetzung von einwandigen Kohlenstoffnanoröhren (SWNT) mit einem Gemisch aus KMnO₄ und H₂SO₄ gemäß Reaktion (3): 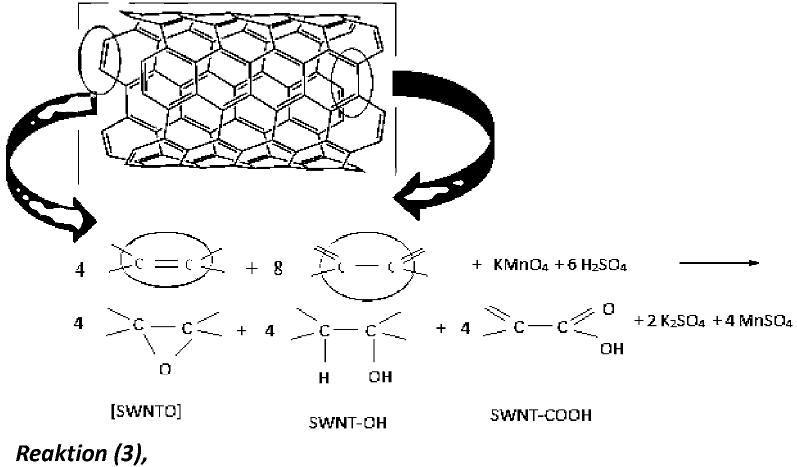 zur Gewinnung oxidierter SWNTs, wobei die Abkürzung "oxidierte SWNTs" eine Mischung aus folgenden Bestandteilen bezeichnet: mit Epoxidgruppen funktionalisierte SWNTs (abgekürzt SWNTO), mit Hydroxylgruppen funktionalisierte SWNTs (abgekürzt SWNT-OH) und mit Carboxylgruppen funktionalisierte SWNTs (abgekürzt SWNT-COOH);
die so erhaltenen oxidierten SWNTs werden filtriert, auf einen pH-Wert von 7 eingestellt und zu einem Pulver getrocknet;
e) Dispergieren der in Schritt d) erhaltenen oxidierten SWNTs in einem organischen Lösungsmittel, vorzugsweise Dimethylformamid (DMF), und anschließende Abscheidung auf der Oberfläche einer Siebdruck-Kohlenstoffelektrode (SPCE) mittels Tropfengießverfahren, wodurch mit oxidierten SWNTs modifizierte SPCE entsteht;
f) Zugabe, mittels Tropfengießverfahren, zu den in Schritt e) erhaltenen "oxidierten SWNTmodifizierten SPCE, einer wässrigen Lösung von 1-Ethyl-3-(3-dimethylaminopropyl)carbodiimid (EDC) in einer Konzentration von 0,5-1,5 mM, vorzugsweise 1 mM, die mit SWNT-COOH gemäß der Reaktion (4) reagiert: 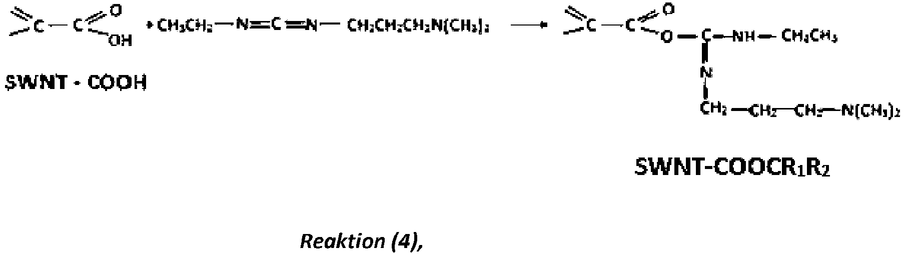 mit der Umwandlung von SWNT-COOH in SWNTs, die an der Estergruppe mit den Radikalen R₁ und R₂ funktionalisiert sind (bezeichnet als SWNT-COOCR₁R₂), wobei R₁ -NH-CH₂-CH₃ und R₂ =N-(CH₂)₃-N(CH₃)₂ ist;
g) Abscheidung von GQD-SH, das in Schritt c) erhalten wurde, auf die Oberfläche der im vorherigen Schritt modifizierten SPCEs, mittels Tropfengießverfahren, was zur Funktionalisierung von SWNTO, SWNT-OH und SWNT-COOCR₁R₂ mit GQD-SH gemäß den Reaktionen (5), (6) bzw. (7) führt: 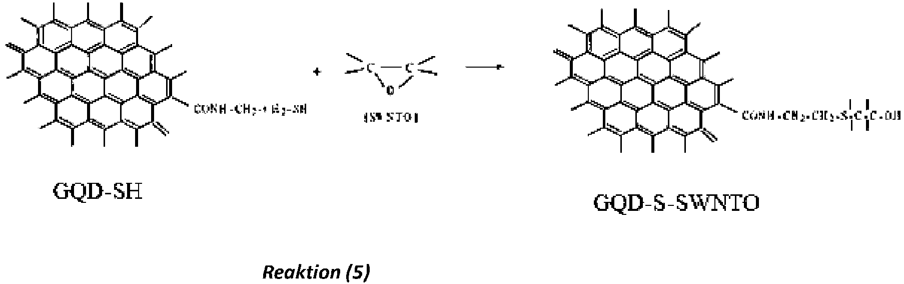 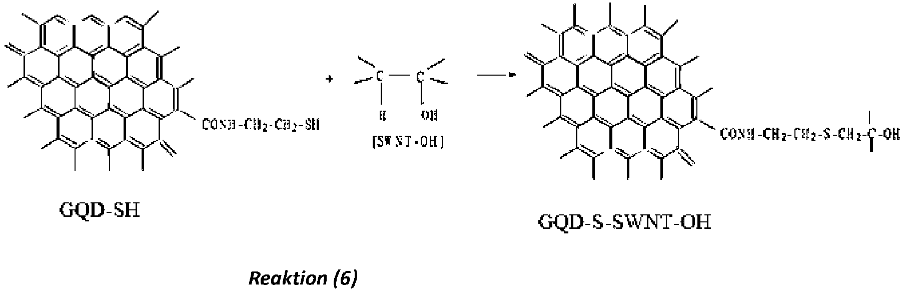 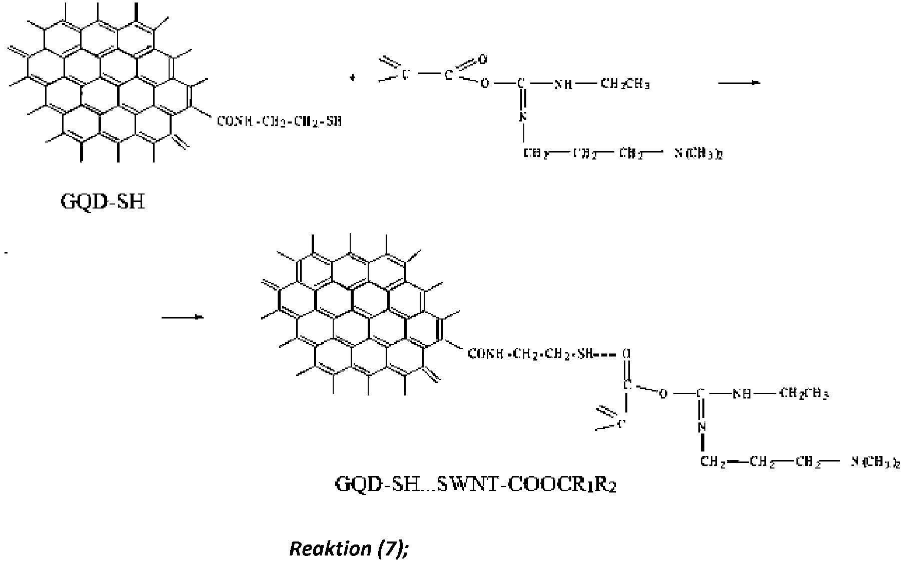 im Anschluss an die Reaktionen (5), (6) und (7) werden "SPCEs, modifiziert mit oxidierten SWNTs, die mit GQWD-SH dekoriert sind" erhalten, d. h. SPCEs, die mit einer Mischung aus funktionalisierten SWNTs die die als oben genannten Strukturen GQD-S-SWNTO, GQD-S-SWNT-OH und GQD-SH...SWNT-COOCR1R2 bezeichneten aufweisen, wobei R₁ und R₂ die oben definierten Bedeutungen haben.

2. Verfahren zur Herstellung von Elektroden nach Anspruch 1, umfassend den weiteren Schritt:
(h) Aufbringen von 10-30 µl, vorzugsweise 25 µl Ag-Nanopartikeln mit einer mittleren Größe von 10 nm pro Elektrode auf die SPCEs, modifiziert mit oxidierten SWNTs, die mit GQWD-SH dekoriert sind aus Schritt (g) mittels T Tropfengießverfahren, wodurch Verbindungen gemäß den folgenden Formeln 8.1, 8.2 und 8.3 entstehen:

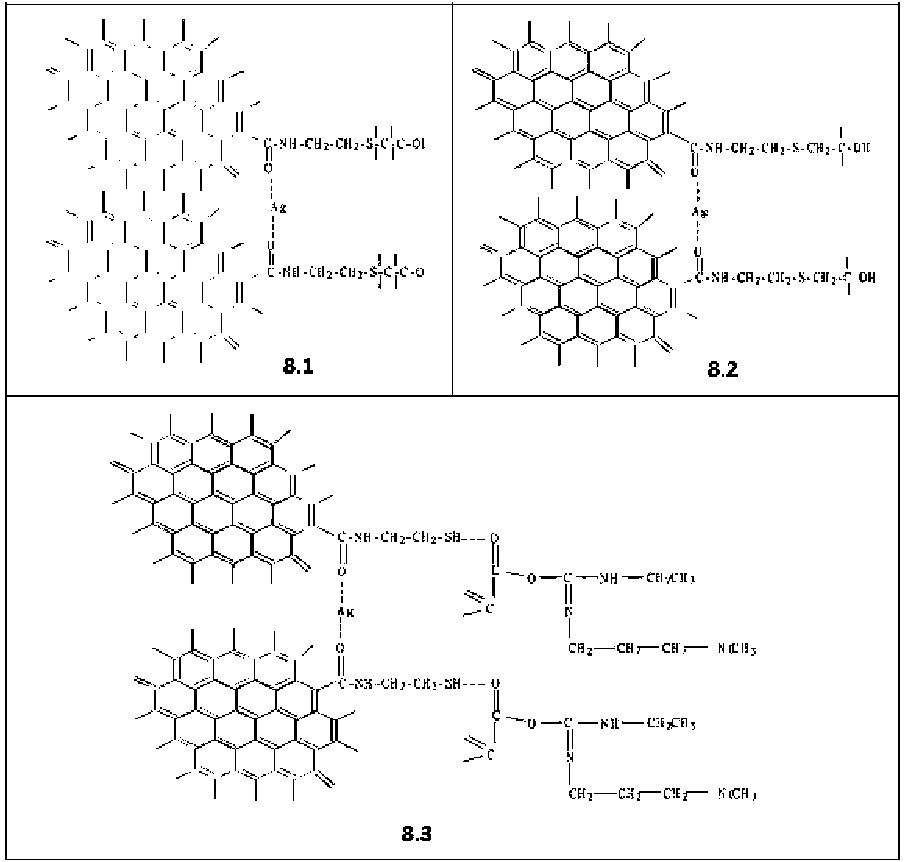

3. Verfahren nach einem der vorhergehenden Ansprüche, wobei in Schritt a) das Säuregemisch aus HNO₃ und HCl als Gemisch aus einer 68-90%igen HNO₃-Lösung und einer 36,5-38%igen HCl-Lösung vorliegt, wobei die Lösungen ein Volumenverhältnis von HNO₃ : HCl von 1 : 3 aufweisen und die Konzentration der mit dem Säuregemisch reagierenden gereinigten SWCNTs im Bereich von 0,5-2 mg/ml Säuregemisch liegt.

4. Verfahren nach einem der vorhergehenden Ansprüche, wobei die *Reaktion (2)* in einem organischen Lösungsmittel, vorzugsweise Ethanol, über einen Zeitraum von 20-30 Stunden, vorzugsweise 24 Stunden, stattfindet und das Gewichtsverhältnis (g/g) GQD-COOH : Cysteamin im Bereich von 0,5-2 g/g liegt.

5. Verfahren nach einem der vorhergehenden Ansprüche, wobei in *Reaktion (3)* 1-3 mg/ml SWNTs zu einer wässrigen Mischung aus KMnO₄ (7-9 mM, vorzugsweise 8 mM) und H₂SO₄ (0,2-0,4 M, vorzugsweise 0,32 M) bei Normaltemperatur und -druck unter Homogenisierung zugegeben werden.

6. Siebgedruckte Kohlenstoffelektroden, modifiziert mit oxidierten, mit Graphen-Quantenpunkten dekorierten einwandigen Kohlenstoffnanoröhren, hergestellt nach dem Verfahren nach einem der vorhergehenden Ansprüche.

7. Verwendung der nach Anspruch 6 mit oxidierten, mit Graphen-Quantenpunkten dekorierten einwandigen Kohlenstoffnanoröhren modifizierten, siebgedruckten Kohlenstoffelektroden als elektrochemische Sensoren, insbesondere als Biosensoren, vorzugsweise zum Nachweis von Anti-Hepatitis-B-Virus (Anti-HBV)-Antikörpern.

## Revendications

1. Procédé de fabrication d'électrodes sérigraphiées modifiées par des nanotubes de carbone monocouches oxydés et décorés de points quantiques de graphène, ledit procédé comprenant les étapes suivantes :
a) faire réagir des nanotubes de carbone monocouches (SWNT) avec un mélange d'acides HNO₃ et HCl pour obtenir des SWNT fonctionnalisés par des groupes carboxyle (abrégé en SWNT-COOH), selon la réaction (1) : 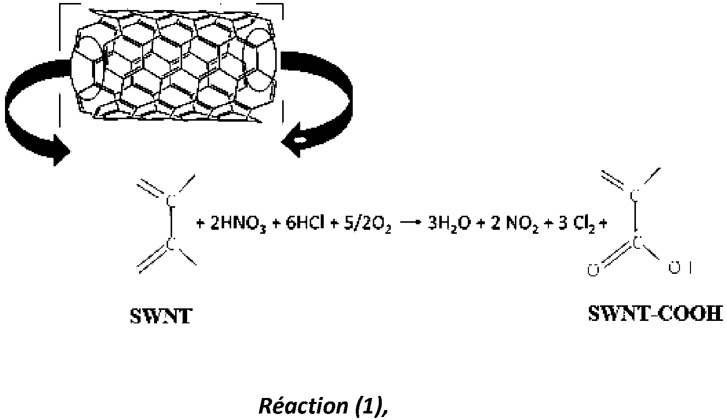 les SWNT-COOH obtenus sont ensuite filtrés, leur pH ajusté à 7, puis ils sont séchés sous forme de poudre ;
b) traitement thermique à l'air des SWNT-COOH obtenus à l'étape a) à une température comprise entre 90 et 120 °C, de préférence à 100 °C, afin d'obtenir des points quantiques de graphène fonctionnalisés par des groupes carboxyle (abrégé en GQD-COOH) ;
c) faire réagir des GQD-COOH obtenus à l'étape b) avec la cystéamine selon la réaction (2) 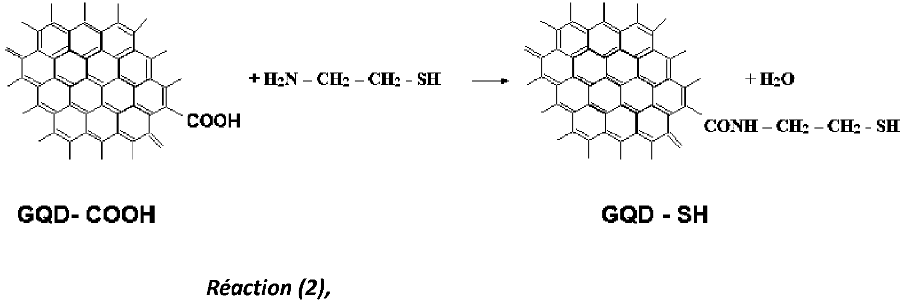 pour obtenir des points quantiques de graphène fonctionnalisés par des thiols (abrégé en GQD-SH), qui sont filtrés et dispersés dans un solvant organique, de préférence le diméthylformamide (DMF) ;
d) faire réagir des nanotubes de carbone à paroi unique (SWNT) avec un mélange de KMnO₄ et de H₂SO₄ selon la réaction (3) : 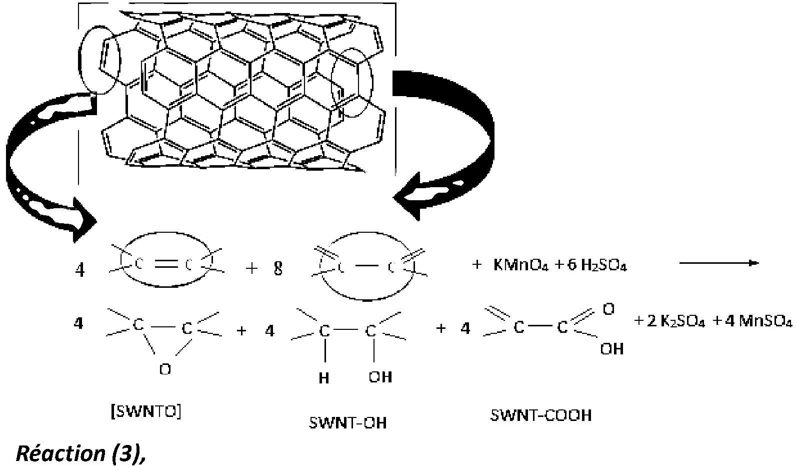 pour obtenir SWNT oxydés, dans lequel par la formule abrégée « SWNT oxydés » est désigné un un mélange composé de : SWNT fonctionnalisés par des groupes époxy (abrégé en SWNT-O), SWNT fonctionnalisés par des groupes hydroxyle (abrégé en SWNT-OH) et SWNT fonctionnalisés par des groupes carboxyle (abrégé en SWNT-COOH) ;
les SWNT oxydés ainsi obtenus sont filtrés, leur pH ajusté à 7, puis ils sont séchés pour obtenir une poudre ;
e) disperser les SWNT oxydés obtenus à l'étape d) dans un solvant organique, de préférence diméthylformamide (DMF), suivie de leur déposition sur la surface d'une électrode de carbone sérigraphiée (SPCE) par la méthode de « dépôt par goutte », ce qui permet d'obtenir SPCE modifiée par des SWNT oxydés.
f) l'ajout, par la méthode de « dépôt par goutte », aux «SPCE modifiés par SWNT oxydés» obtenus à l'étape e) d'une solution aqueuse de 1-éthyl-3-(3-diméthylaminopropyl)carbodiimide (EDC) à une concentration de 0,5 à 1,5 mM, de préférence 1 mM, qui réagira avec SWNT-COOH selon la réaction (4) : 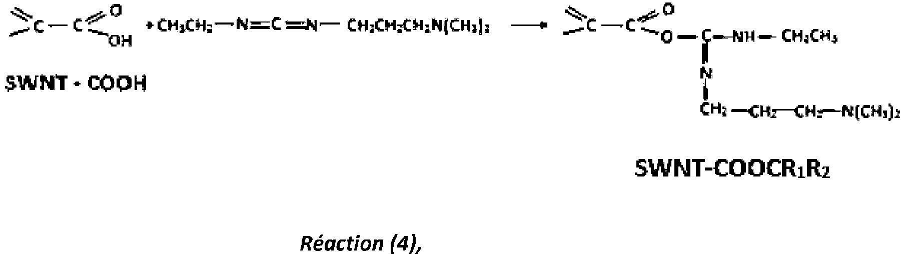 avec la transformation de SWNT-COOH en SWNT fonctionnalisés au groupement ester par les radicaux R₁ et R₂ (notés SWNT-COOCR₁R₂), où R₁ est -NH-CH₂-CH₃ et R₂ est =N-(CH₂)₃-N(CH₃)₂ ;
g) déposition sur la surface des SPCE modifiées obtenues à l'étape précédente de GQD-SH obtenu à l'étape c), par la méthode de « dépôt par goutte », conduisant à la fonctionnalisation de SWNTO, SWNT-OH et SWNT-COOCR₁R₂ par GQD-SH selon les réactions (5), (6) et (7), respectivement : 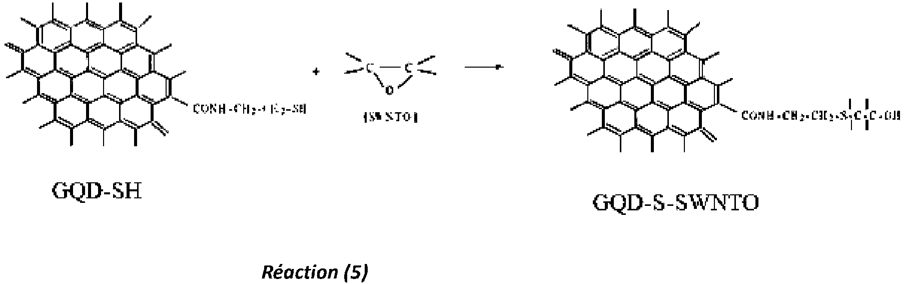 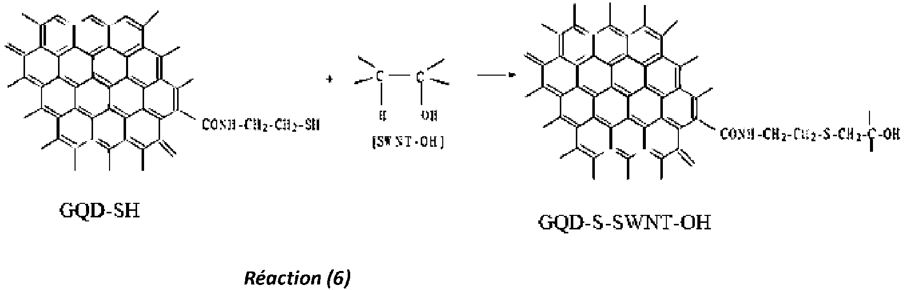 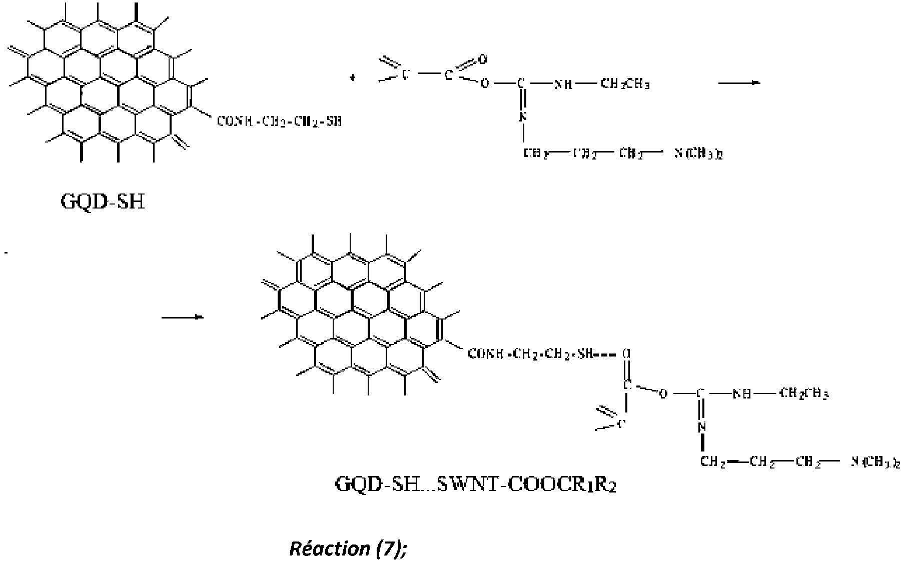 suite aux réactions (5), (6) et (7), on obtient des « SPCE modifiés avec des SWNT oxydés décorés avec du GQD-SH », c'est-à-dire des SPCE modifiés avec un mélange de SWNT fonctionnalisés ayant les structures ci-dessus étiquetées GQD-S-SWNTO, GQD-S-SWNT-OH et GQD-SH...SWNT-COOCR₁R₂, où R₁ et R₂ ont les significations définies ci-dessus.

2. Procédé de fabrication d'électrodes selon la revendication 1, comprenant l'étape supplémentaire:
(h) ancrage sur les électrodes SPCE modifiées par des SWNT oxydés et décorés de GQD-SH obtenus à l'étape (g), par la méthode de « dépôt par goutte », de 10 à 30 µl, de préférence 25 µl par électrode, de nanoparticules de Ag d'une taille moyenne de 10 nm, obtenir des composés conformes aux formules 8.1, 8.2 et 8.3 suivantes :

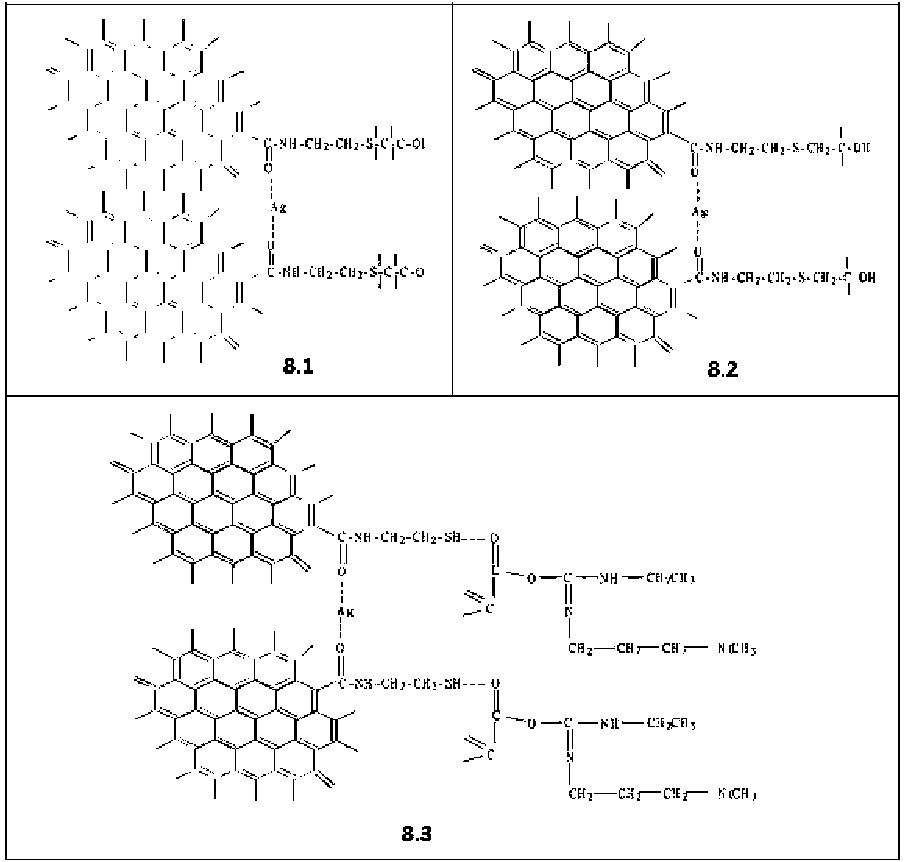

3. Procédé selon l'une quelconque des revendications précédentes, dans lequel, à l'étape a), le mélange d'acides HNO₃ et HCl se présente sous la forme d'un mélange de solution de HNO₃ à 68-90 % et de solution de HCl à 36,5-38 %, lesdites solutions étant dans un rapport volumétrique HNO₃ : HCl de 1 : 3, et la concentration de SWCNT purifiés réagissant avec le mélange d'acides est comprise entre 0,5 et 2 mg/ml de mélange d'acides.

4. Procédé selon l'une quelconque des revendications précédentes, dans lequel la *Réaction (2)* a lieu dans un solvant organique, de préférence l'éthanol, pendant une durée de 20 à 30 heures, de préférence 24 heures, et le rapport pondéral (g/g) GQD-COOH : cystéamine est compris entre 0,5 et 2 g/g.

5. Procédé selon l'une quelconque des revendications précédentes, dans lequel, lors de la *Réaction (3)*, 1 à 3 mg/ml de SWNT sont ajoutés à un mélange aqueux de KMnO₄ (7 à 9 mM, de préférence 8 mM) et de H₂SO₄ (0,2 à 0,4 M, de préférence 0,32 M) à température et pression ambiantes, sous homogénéisation.

6. Électrodes de carbone sérigraphiées, modifiées par des nanotubes de carbone à paroi unique oxydés et décorés de points quantiques de graphène, obtenues par le procédé selon l'une quelconque des revendications précédentes.

7. Utilisation d'électrodes de carbone sérigraphiées, modifiées par des nanotubes de carbone à paroi unique oxydés et décorés de points quantiques de graphène, selon la revendication 6, comme capteurs électrochimiques, notamment comme biocapteurs, de préférence pour la détection d'anticorps anti-virus de l'hépatite B (anti-VHB).
